# EUROPÄISCHE PATENTSCHRIFT

(11) **EP 2 241 953 B1**
(45) Veröffentlichungstag und Bekanntmachung des Hinweises auf die Patenterteilung: **28.08.2019**
(21) Anmeldenummer: 09005483.4
(22) Anmeldetag: 17.04.2009
(51) Int. Cl.: G06F 1/14, G06F 13/24

(54) **Verfahren und Vorrichtung zur Realisierung einer fehlersicheren Zeitfunktion**
Method and device for realising an error-proof time function
Procédé et dispositif de réalisation d'une fonction temporelle protégée contre l'erreur

(43) Veröffentlichungstag der Anmeldung: 20.10.2010
(73) Patentinhaber: Siemens Aktiengesellschaft, 80333 München (DE)
(72) Erfinder: Eyermann, Paul, 91074 Herzogenaurach (DE); Labouliere, Michael, 18901 Doylestown (US); Schwarz, Robert, 97215 Portland (US); Walter, Markus, 96050 Bamberg (DE); Weinert, Kai, 90518 Altdorf (DE)

(56) Entgegenhaltungen:
- WO-A-2007/037640
- US-A1- 2007 245 054
- US-A1- 2008 098 146
- US-B1- 6 457 135

## Beschreibung

### Fachgebiet der Erfindung

In vielen Systemen in denen verschiedene Geräte interagieren, ist es notwendig, eine fehlersichere Zeitfunktion zu realisieren. Die im System vorhandene Standard-Zeitfunktion wird üblicherweise von einem weiteren unabhängigen Zeitgeber (im Weiteren auch Überwachungstimer oder F-Timer genannt) abgeglichen.

Die Anforderungen an die Korrektheit des Zeitsignals sind in den beschriebenen Fällen sehr hoch, d. h. es ist nur eine gering Fehler- bzw. Abweichungstoleranz gegeben.

Der bekannteste Zähler ist der TSC (timestamp counter), eingeführt mit den x86 Pentium Prozessoren und in allen CPU Designs seitdem vertreten. Es handelt sich um ein 64-Bit Register dessen Wert mit dem CPU Takt inkrementiert wird und sowohl vom Kernel Space als auch vom User Space ausgelesen werden kann. Ein solcher Timer kann zum Beispiel der Druckschrift WO 2007/037640 A1 entnommen werden.

### Stand der Technik

Bislang musste zur Lösung des Problems ein zweiter Zeitgeber (F-Timer) eingebaut werden. Dazu ist eine entsprechende Hardware-Erweiterung, beispielsweise ein spezieller Halbleiter-Baustein, notwendig, der die Taktung übernimmt.

Es ist weiterhin bereits bekannt, zum Überwachen einer Zeitbasis einer Datenverarbeitungseinheit über einen einzigen Schwingquarz eine elektrische Schwingung und aus der Schwingung ein Taktsignal zu erzeugen. Zur Überprüfung einer Genauigkeit des Taktsignals wird eine erste Task zyklisch in einem Abstand einer ersten Zeitdauer aufgerufen und dadurch ein Zählwert verändert, und in einer zweiten Task, die zyklisch in einem Abstand einer zweiten Zeitdauer aufgerufen wird, eine Operation auf den Zählwert angewendet wird und ein Ergebnis der Operation mit einem vorgebbaren Grenzwert verglichen wird.

Diese Zeitgeberüberwachungsfunktion ist aber nicht sicher genug, d. h. sie entspricht beispielsweise nicht den Vorgaben der entsprechenden Normen z.B. IEC61508.

Aus der WO 2007/037640 A1 ist ein Verfahren zum Erkennen von Timer Modifikationen durch Generierung eines Programmable Interrupt Timer und Vergleich mit dem System-Timer.

Aufgabe der Erfindung ist es, ein verbessertes Verfahren anzugeben, welches es ermöglicht, einen im System vorhandenen Schwingquarz zur gezielten Erzeugung einer Zeitfunktion zu verwenden,
sowie eine Vorrichtung anzugeben, welches die genannten Nachteile nicht aufweist und ohne zusätzliche HW-Bauteile auskommt.

### Darstellung der Erfindung

Diese Aufgabe wird gelöst durch ein Verfahren gemäß Patentanspruch 1.

Diese Aufgabe wird weiterhin gelöst durch eine Vorrichtung gemäß Patentanspruch 7.

Vorteilhafte Ausgestaltungen und Weiterbildungen sind in den Unteransprüchen angegeben.

Vorteilhaft ist es, wenn die Taktrate des periodischen Interrupt Signals erhöht ist und die zusätzlichen Interrupt Signale ausgefiltert werden. Die bisher bearbeitende Routine erhält somit genauso viele Interrupt Signale wie zuvor.

Das erfindungsgemäße Verfahren kann so auf einem Standard-Betriebssystem eingesetzt werden.

Das Zeitsignal wird von einem ersten System-Quarz erzeugt und das zweite Zeitsignal wird von einem weiteren System-Quarz erzeugt. So kann das erfindungsgemäße Zeitsignal zur Überwachung für einen zweites Zeitsignal zur Realisierung einer fehlersicheren Zeitfunktion eingesetzt werden.

In einer ersten Ausführungsform beträgt die Frequenz des Interrupt Signals (IRQ8) 8,192 kHz und die Taktlänge ca. 122,07 µs.

Falls periodische Interrupts der von dem systeminternen Echtzeituhr (Systemquarz), beispielsweise einem CMOS/RTC durch zu lange Interruptsperren nicht erfasst werden, kann es zu einem Fehler kommen, da der Überwachungstimer in diesem Fall langsamer läuft und die beiden Zeitgeber auseinanderlaufen. In einer weiteren vorteilhaften Ausführungsform beträgt daher die Frequenz des Interrupt Signals (IRQ8) 1,024 kHz und die Taktlänge ca. 976 µs. Da bei einem Takt von 8,192 kHz eine Interruptsperre von größer 122 µs zu einem Verlust von einem Interrupt führt und damit der Überwachungstimer langsamer läuft. Bei einem Takt von 1,024 kHz führt jedoch erst eine Interruptsperre von größer 976 µs zu einem Verlust eines Interrupts.

Mittels Normierung kann beim Standard-Timer eine Taktlänge von 1 ms gebildet werden, eine Taktlänge von ca. 122 µs ist aber weiterhin möglich, oder auch höhere Auflösungen.

### Kurzbeschreibung der Zeichnungen

Im Folgenden wird die Erfindung anhand von Ausführungsbeispielen erläutert. Dabei zeigen
Figur 1 ein Ablaufdiagramm zum erfindungsgemäßen Verfahren
Figur 2 ein Diagramm zur Realisierung in Hardware
Figur 3 das Überschreiben des Registers in der IDT
Figur 4 ein erstes Ausführungsbeispiel und
Figur 5 ein zweites Ausführungsbeispiel.

### Beschreibung der bevorzugten Ausgestaltungsformen

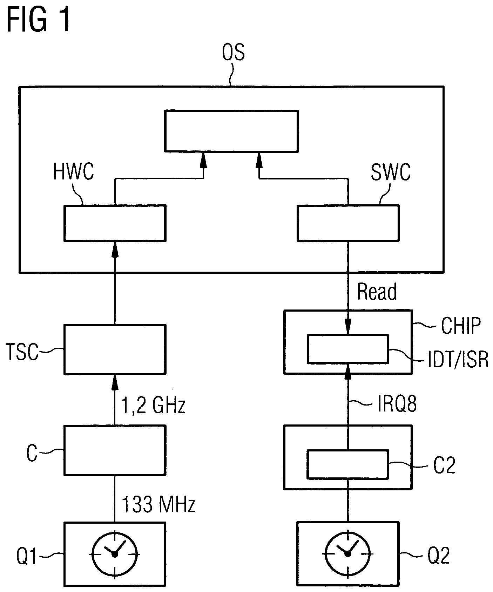

Figur 1 zeigt eine schematische Darstellung der Lösung in einem Ablauf-Diagramm, welche die beiden Zeit-Signale darstellt, welche von den Quarzen Q1 und Q2 erzeugt werden. Der linke Quarz Q1 erzeugt typischerweise eine Frequenz von 14,31818 MHz, das Signal wird weiter geleitet zu einem PLL, beispielsweise Intel Core mit 1,2 GHz. Der Time Stamp Counter TSC läuft mit Prozessor-Takt, hier ist ein Überlauf z. B. nach 487 Jahren zu erwarten. Dieser Standard HW-Zähler wird dann ausgelesen und normiert auf 1 ms.

Im rechten Zweig sieht man den RTC Quarz Q2, welcher einen Takt von 32,768 kHz erzeugt. Über die Interrupt Service Routine ISR, die alle 122,07 µs über den Interrupt aufgerufen wird, wird der SW-Zähler mit hoch- oder runtergezählt. Dieser Zählwert kann über eine Programmierschnittstelle ausgelesen und zum Vergleich verwendet werden.

Von der beschriebenen Lösung sind einige technische Hürden zu überwinden. Das RTC Interrupt Signal wird umgeleitet und von der Interrupt Service Routine ISR bearbeitet, so dass der Zählerwert für den F-Timer erzeugt wird. Um beispielsweise das Betriebssystem Windows mit Interrupt Signalen in der korrekten Frequenz zur versorgen, wird in der ISR auch ein Interrupt-Filter implementiert, der jeden n-ten Interrupt zum Windows Betriebssystem weiterleitet, indem er einen Inter Processor Interrupt (IPI-Message) sendet.

Beim Beispiel Windows Betriebssystem wird IRQ8 verwendet. Es ist nicht gestattet, den Interrupt mit entsprechenden API Aufrufen zu koppeln. Daher muss ein direkter Zugriff auf die Interrupt Descriptor Table IDT erfolgen, indem das Betriebssystem OS umgangen wird.

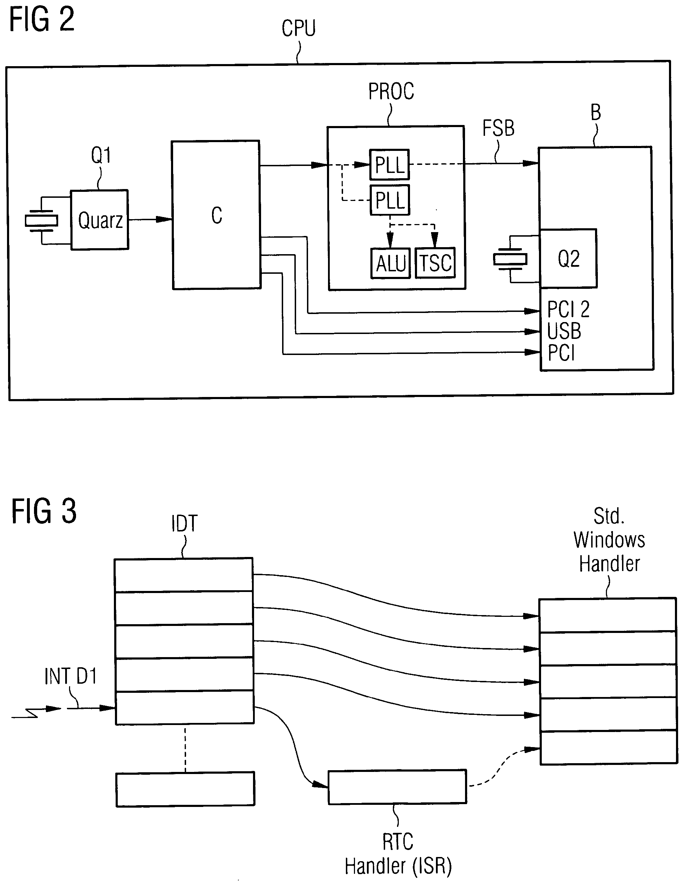

In Figur 3 ist dargestellt, wie der F-Timer RTC Handler eingreift, um den Eintrag in der IDT zu überschreiben.

Die konkrete technische Realisierung ist abhängig von der verwendeten HW-Plattform; z. B.:
Platform check: Singlecore oder multicore etc.
Interrupt Controller check: PIC / APIC

Der Interrupt wird zum RTX Processor umgeleitet, dort behandelt und dann beispielsweise zum Windows Prozessor als IPI (Inter Processor Interrupt) weitergeleitet. Abhängig von der Plattform wird der IPI entweder über den APIC-Bus oder über FSB (Front Side Bus).

Da der RTC periodic Interrupt vom Betriebssystem OS bereits als System Timer verwendet wird, würde die Änderung der Frequenz des RTC IRQ8 die Wahrnehmung der Zeit des Betriebssystems beeinflussen. Um dies zu vermeiden, ist es möglich, Interrupts herauszufiltern. Es wird bei einer erhöhten Frequenz dann nur jeder n-te Interrupt weitergegeben, so dass im Betriebssystem keine Auswirkungen zu bemerken sind.

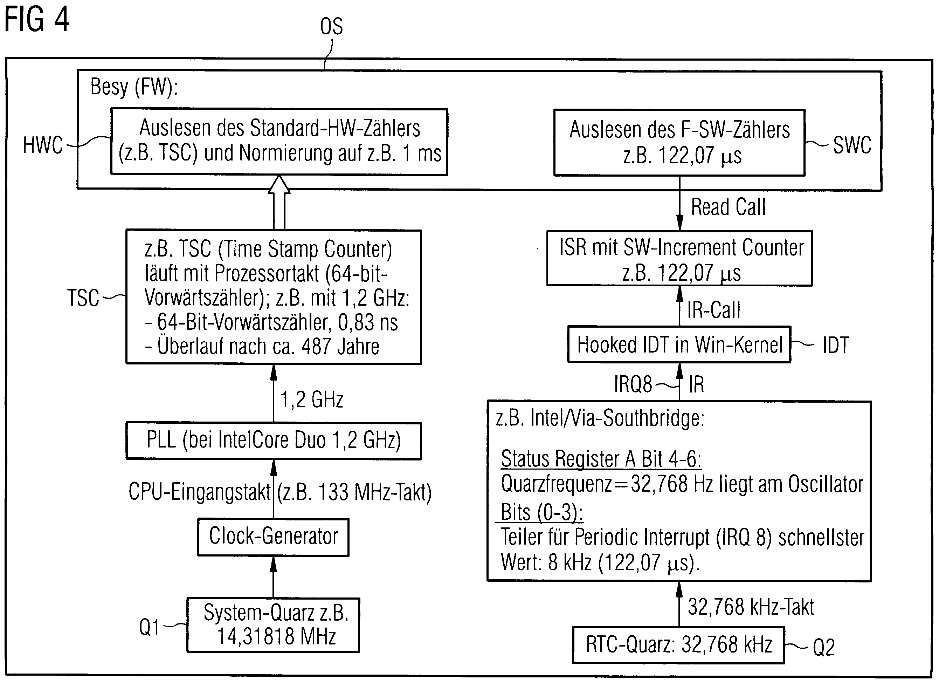

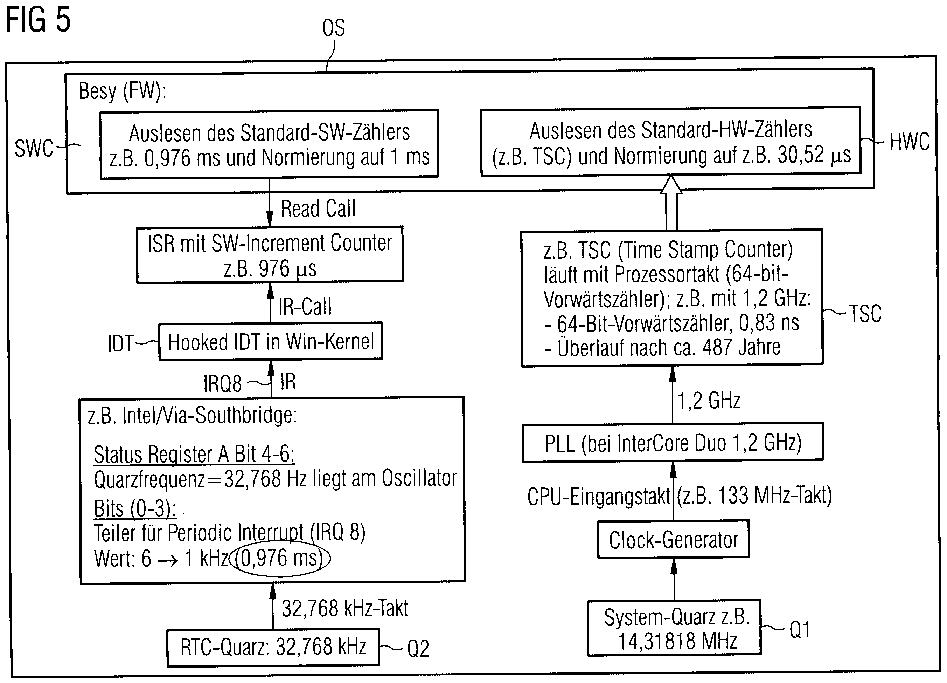

Die Figuren 4 und 5 beschreiben jeweils Beispiele einer konkreten technischen Realisierung.

Neben einem Standard-Timer der aus dem System-Quarz Q1 abgeleitet wird (z. B. Time Stamp Counter, Local-APICTimer, PC-Timer, PM-Timer. etc.) wird das Überwachungszeitsignal F-Timer aus der CMOS/RTC (unabhängiger Quarz Q2) ohne eine zusätzliche HW-Erweiterung gebildet.

Hierzu wird die Fähigkeit der Real Time Clock RTC, einen periodischen Interrupt (z.B. 122,070 ps) zu erzeugen, genutzt. Aus diesem periodischen Interrupt wird der F-Timer gebildet.

Genauer wird im CMOS ein periodisches Interrupt-Signal (z. B. mit Taktlänge 122,070 µs) konfiguriert mit dem der Interrupt IRQ8 generiert wird, der über z. B. den externen Advanced Programmable Interrupt Controller APIC in der SouthBridge zur CPU weitergegeben wird. Die CPU findet dann in der so modifizierten Interrupt Description Table IDT die Interrupt Service Routine ISR für den RTC-Counter und ruft diese auf. In der ISR wird nach Prüfung der Konfigurationsregister im CMOS/RTC ein Zähler gebildet.

Design und Auswirkung auf das PC-Betriebssystem z. B. Windows mit einem unterlagerten Echtzeitbetriebssystem (z.B. Ardence RTX), durch die hooked IDT des F-Timers: Der RTC-Counter wird im Windows Kernel und in RTX als ISR implementiert. Mit der RTX-Funktion RtAttachlnterruptVector() kann normalerweise eine Interrupt-Service Routine an der Interrupt Description Table IDT eingehängt werden Aber im Falle der RTC wurde dieser Interrupt der RTC bereits von Windows "non sharable" reserviert, also kann die ISR nur direkt unter Umgehung der von Windows oder Ardence dafür vorgesehenen Funktionalität RtAttachlnterruptVector(), über Assembler-Routinen in der IDT eingehängt werden (Hooking IDT). Damit wird die exklusive Reservierung der RTC-Interrupts durch Windows umgangen, es entsteht somit ein Eingriff in wesentliche Systemkomponenten des Anwender-PC's. Die hier vorliegende Art des Hookings ermöglicht, dass andere Anwendungen nach wie vor aufgerufen werden, es wird nur die RTC-ISR vor den anderen ISRs aktiviert und dann die ISR aufgerufen die bereits vor dem Hooking in der IDT eingetragen war.

Mit dem Verfahren ist es möglich, eine fehlersichere Zeitfunktionen für ein Sicherheitssystem mit einem Sicherheits-Integritätslevel 3 (SIL3) (z. B. SIMATIC S7 Distributed Safety) ohne eine HW-Erweiterung bereitzustellen bzw. dies damit auch auf einen Standard-PC ohne eine HW-Erweiterung zu realisieren (z. B. WinAC RTX F plus Distributed Safety).

## Patentansprüche

1. Verfahren zur Generierung einer fehlersicheren Zeitfunktion mit:
einem Standard-Timer (HWC), welcher innerhalb einer Hardware, basierend auf einem ersten Quarz (Q1), insbesondere einem System-Quarz, gebildet wird; und mit einer systeminternen Echtzeituhr (RTC), basierend auf einem unabhängigen zweiten Quarz (Q2), wobei das Verfahren folgende Schritte umfasst:
- Erzeugen eines periodischen Interrupt Signals (IRQ8) durch die systeminterne Echtzeituhr (RTC) und Weitergabe des periodischen Interrupt Signals (IRQ8) an eine CPU,
- bei Empfang des periodischen Interrupt Signals (IRQ8), Zugriff durch die CPU auf einen Tabelleneintrag in einer systeminternen Tabelle (IDT) mit dem Verweis auf eine Routine (ISR),
- Bildung eines Zählers (SWC) durch die Routine (ISR), und Einhängen der Routine (ISR) in der systeminternen Tabelle (IDT) mittels Assembler-Routinen und
- Vergleich des so gebildeten Zählers (SWC) mit dem Standard-Timer (HWC).

2. Verfahren nach Patentanspruch 1, **dadurch gekennzeichnet, dass**
die Taktrate des periodischen Interrupt Signals (IRQ8) erhöht ist und die zusätzlichen Interrupt Signale ausgefiltert werden.

3. Verfahren nach einem der vorherigen Patentansprüche, **dadurch gekennzeichnet, dass** es auf einem Standard-Betriebssystem eingesetzt wird.

4. Verfahren nach einem der vorherigen Patentansprüche,
**dadurch gekennzeichnet, dass**
die Frequenz des Interrupt Signals (IRQ8) 8,192 kHz und die Taktlänge ca. 122 µs beträgt.

5. Verfahren nach einem der Patentansprüche 1 bis 3, **dadurch gekennzeichnet, dass**
die Frequenz des Interrupt Signals (IRQ8) 1,024 kHz und die Taktlänge ca. 976 µs beträgt.

6. Verfahren nach Patentanspruch 4 oder 5, **dadurch**
**gekennzeichnet, dass**
mittels Normierung eine Taktlänge von 1 ms gebildet wird.

7. Vorrichtung zur Durchführung einer fehlersicheren Zeitfunktion mit:
- einem ersten System Quarz (Q1) auf dessen Basis ein Standard-Timer (HWC) gebildet wird,
- einer systeminternen Echtzeituhr (RTC), basierend auf einem unabhängigen zweiten Quarz (Q2) und mit:
- Mitteln zur Erzeugung eines periodischen Interrupt Signals (IRQ8) durch die systeminterne Echtzeituhr (RTC) und Weitergabe des periodischen Interrupt Signals (IRQ8)an eine CPU, wobei, bei Empfang des periodischen Interrupt Signals (IRQ8),durch die CPU auf einen Tabelleneintrag in einer systeminternen Tabelle (IDT) zugegriffen wird mit dem Verweis auf eine Routine (ISR), und
- Mitteln zur Bildung eines Zählers (SWC) durch die Routine (ISR), und Einhängen der Routine (ISR)in der systeminternen Tabelle (IDT) mittels Assembler-Routinen; und
- Mitteln zum Vergleich des so gebildeten Zählers (SWC) mit dem Standard-Timer (HWC).

8. Vorrichtung nach Patentanspruch 7, **dadurch**
**gekennzeichnet, dass**
die Frequenz des Interrupt Signals (IRQ8) 8,192 kHz und die Taktlänge ca. 122 µs beträgt.

9. Vorrichtung nach Patentanspruch 7, **dadurch**
**gekennzeichnet, dass**
die Frequenz des Interrupt Signals (IRQ8) 1,024 kHz und die Taktlänge ca. 976 µs beträgt.

10. Vorrichtung nach einem der Patentansprüche 7 bis 9,
**dadurch gekennzeichnet, dass**
es auf einem Standard-Betriebssystem eingesetzt wird.

## Claims

1. Method for generating a failsafe time function having: a standard timer (HWC), which is formed within a hardware, based on a first quartz (Q1), in particular a system quartz; and having an intrasystem real-time clock (RTC), based on an independent second quartz (Q2), wherein the method comprises the following steps:
Generating a periodic interrupt signal (IRQ8) by means of the intrasystem real-time clock (RTC) and forwarding the periodic interrupt signal (IRQ8) to a CPU,
Access a table entry in an intrasystem table (IDT) with reference to a routine (ISR) upon receipt of the periodic interrupt signal (IRQ8) by means of the CPU,
Forming a counter (SWC) by means of the routine (ISR) and suspending the routine (ISR) in the intrasystem table (IDT) using assembler routines and comparing the thus formed counter (SWC) with the standard timer (HWC).

2. Method according to claim 1,
**characterised in that**
the clock rate of the periodic interrupt signal (IRQ8) is increased and the additional interrupt signals are filtered out.

3. Method according to one of the preceding claims,
**characterised in that**
it is used on a standard operating system.

4. Method according to one of the preceding claims,
**characterised in that**
the frequency of the interrupt signal (IRQ8) amounts to 8.192 kHz and the clock length amounts to approximately 122 µs.

5. Method according to one of claims 1 to 3,
**characterised in that**
the frequency of the interrupt signal (IRQ8) amounts to 1.024 kHz and the clock length amounts to approximately 976 µs.

6. Method according to claim 4 or 5,
**characterised in that**
a clock length of 1 ms is formed by means of standardization.

7. Apparatus for implementing a failsafe time function having:
- a first system quartz (Q1) on the basis of which a standard timer (HWC) is formed,
- an intrasystem real-time clock (RTC) based on an independent second quartz (Q2) and having:
- Means for generating a periodic interrupt signal (IRQ8) by means of the intrasystem real-time clock (RTC) and forwarding the periodic interrupt signal (IRQ8) to a CPU, wherein, upon receipt of the periodic interrupt signal (IRQ8) by means of the CPU, a table entry in an intrasystem table (IDT) is accessed with reference to a routine (ISR), and
- Means for forming a counter (SWC) by means of the routine (ISR) and suspending the routine (ISR) in the intrasystem table (IDT) using assembler routines; and
- Means for comparing the thus formed counter (SWC) with the standard timer (HWC).

8. Apparatus according to claim 7,
**characterised in that**
the frequency of the interrupt signal (IRQ8) amounts to 8.192 kHz and the clock length to approximately 122 µs.

9. Apparatus according to claim 7,
**characterised in that**
the frequency of the interrupt signal (IRQ8) amounts to 1.024 kHz and the clock length amounts to approximately 976 µs.

10. Apparatus according to one of claims 7 to 9,
**characterised in that**
it is used on a standard operating system.

## Revendications

1. Procédé de génération d'une fonction temporelle protégée contre les erreurs au moyen d'un chronométreur standard (HWC) formé à l'intérieur d'un matériel de traitement informatique, basé sur un premier quartz (Q1), notamment un quartz de système, et au moyen d'une horloge temps réel (RTC) interne au système, basée sur un second quartz indépendant (Q2), dans lequel le procédé comprend les étapes suivantes :
- production d'un signal d'interruption périodique (IRQ8) par l'horloge temps réel interne au système (RTC) et transmission du signal d'interruption périodique (IRQ8) à un processeur,
- à la réception du signal d'interruption périodique (IRQ8), accès par le processeur à une entrée de table dans une table interne au système (IDT) en se référant à une routine (ISR),
- formation d'un compteur (SWC) par la routine (ISR), et accrochage de la routine (ISR) dans la table interne au système (IDT) au moyen de routines d'assemblage, et
- comparaison du compteur ainsi formé (SWC) avec le chronométreur standard (HWC).

2. Procédé selon la revendication 1, **caractérisé en ce que** la cadence du signal d'interruption périodique (IRQ8) est augmentée et les signaux d'interruption supplémentaires sont éliminés par filtration.

3. Procédé selon l'une quelconque des revendications précédentes, **caractérisé en ce qu'**il est implémenté sur un système d'exploitation standard.

4. Procédé selon l'une quelconque des revendications précédentes, **caractérisé en ce que** la fréquence du signal d'interruption périodique (IRQ8) est de 8,192 kHz et la durée de cycle est d'environ 122 µs.

5. Procédé selon l'une des revendications 1 à 3, **caractérisé en ce que** la fréquence du signal d'interruption périodique (IRQ8) est de 1,024 kHz et la durée de cycle est d'environ 976 µs.

6. Procédé selon la revendication 4 ou 5, **caractérisé en ce qu'**une durée de cycle de 1 ms est formée par normalisation.

7. Dispositif destiné à exécuter une fonction temporelle protégée contre les erreurs, comprenant :
- un premier quartz de système (Q1), sur la base duquel un chronométreur standard (HWC) est formé,
- une horloge temps réel (RTC) interne au système, basée sur un second quartz indépendant (Q2), et
- des moyens pour produire un signal d'interruption périodique (IRQ8) par l'horloge temps réel (RTC) interne au système et pour transmettre le signal d'interruption périodique (IRQ8) à un processeur, dans lequel, à la réception du signal d'interruption périodique (IRQ8), il est accédé par le processeur à une entrée de table dans une table interne au système (IDT) en se référant à une routine (ISR),
- des moyens pour former un compteur (SWC) par la routine (ISR) et pour accrocher la routine (ISR) dans la table interne au système (IDT) au moyen de routines d'assemblage, et
- des moyens pour comparer le compteur (SWC) ainsi formé avec le chronométreur standard (HWC).

8. Dispositif selon la revendication 7, **caractérisé en ce que** la fréquence du signal d'interruption périodique (IRQ8) est de 8,192 kHz et la durée de cycle est d'environ 122 µs.

9. Dispositif selon la revendication 7, **caractérisé en ce que** la fréquence du signal d'interruption périodique (IRQ8) est de 1,024 kHz et la durée de cycle est d'environ 976 µs.

10. Dispositif selon l'une des revendications 7 à 9, **caractérisé en ce qu'**il est implémenté sur un système d'exploitation standard.
